# FASCICULE DE BREVET EUROPEEN

(11) **EP 3 545 194 B1**
(45) Date de publication et mention de la délivrance du brevet: **06.01.2021**
(21) Numéro de dépôt: 17818051.9
(22) Date de dépôt: 22.11.2017
(51) Int. Cl.: F04B 9/123, F04B 9/125, F04B 9/131, F04B 9/133, C02F 1/44, B01D 61/08, B01D 61/10, C02F 103/08

(54) **SYSTÈME ET PROCÉDÉ DE PURIFICATION DE LIQUIDE PAR OSMOSE INVERSE.**
VORRICHTUNG UND VERFAHREN ZUR REINIGUNG EINER FLÜSSIGKEIT MITTELS UMKEHROSMOSE
SYSTEM AND METHOD FOR PURIFYING A LIQUID BY REVERSE OSMOSIS

(30) Priorité: 24.11.2016 FR 1661451
(43) Date de publication de la demande: 02.10.2019
(73) Titulaire: Centre National de la Recherche Scientifique, 75016 Paris (FR)
(72) Inventeur: STITOU, Driss, 66570 Saint Nazaire en Roussillon (FR); MAZET, Nathalie, 66100 Perpignan (FR); MAURAN, Sylvain, 66170 Millas (FR)
(74) Mandataire: IPAZ
(86) Numéro de dépôt international: PCT/EP2017/080123
(87) Numéro de publication internationale: WO 2018/095999

(56) Documents cités:
- FR-A1- 2 732 727
- JP-A- 2010 253 344
- US-A1- 2005 170 492
- US-B1- 6 804 962

## Description

L'invention concerne un système de purification de liquide par osmose inverse.

Le domaine de l'invention est le domaine de traitement de liquide à purifier, et plus précisément la production d'eau potable par osmose inverse à partir d'eau de forte salinité ou encore d'eau fortement polluée.

### ETAT DE LA TECHNIQUE

Plusieurs systèmes de purification de liquide à traiter utilisent l'osmose inverse, en particulier, les systèmes de dessalement d'eau. Ces systèmes d'osmose inverse nécessitent de porter l'eau à traiter à une pression au moins supérieure à sa pression osmotique, afin de permettre la perméation de l'eau seule à travers une membrane semi-perméable d'osmose inverse. Les systèmes d'osmose inverse utilisent généralement des pompes à haute pression pour augmenter la pression de l'eau. Cependant, ces systèmes ont des besoins énergétiques élevés.

JP 2010 253344 divulgue un dispositif de pressurisation d'un liquide à traiter en vue de son traitement par une membrane d'osmose inverse. Le système comprend un module de traitement et un moyen de pressurisation comprenant un vérin maître ayant une section supérieure à un vérin esclave.

US 6 804 962 a pour objet un système de dessalement d'eau comprenant un collecteur solaire relié à un évaporateur prévu pour déplacer une pompe. Ladite pompe pressurise un liquide à traiter par un module de traitement par osmose inverse.

FR 2 732 727 décrit un système d'épuration d'un liquide à traiter tel que l'eau salée ou l'eau d'un réseau domestique. Le système comprend un module de traitement par osmose inverse et un dispositif amplificateur de pression du liquide à traiter comprennent deux vérins.

US 2005/170492 décrit un système comprenant un module de traitement et un moyen de pressurisation et comprenant un vérin maître ayant une section supérieure à un vérin esclave.

Par ailleurs, on connait le système d'osmose inverse proposé dans le brevet US 2003/0015471 A1**.** Ce système intègre un dispositif hydraulique pour augmenter la pression du liquide à traiter. Le dispositif hydraulique comprend un vérin esclave, contenant le liquide à traiter, entrainé par un vérin maitre, contenant un fluide moteur, qui peut être pressurisé par une source de chaleur telle qu'un collecteur solaire thermique. La section du vérin esclave est supérieure à la section du vérin maitre. Le dispositif hydraulique porte ainsi la pression du liquide à traiter à une pression inférieure à la pression du fluide moteur. En conséquence, la pression du fluide moteur est toujours supérieure à la pression osmotique du liquide à traiter. Cependant, la consommation énergétique dépend de la pression osmotique du liquide à traiter, en particulier la teneur en sel de l'eau. Ce système n'est donc pas adapté dans le cas de traitement d'eau avec une forte teneur en sel, telle que l'eau de mer, car il faudrait porter le liquide à traiter, et donc le fluide moteur, à des pressions très élevées, ce qui implique une consommation d'énergie importante et une faible efficacité énergétique, donc un coût de production de liquide purifié important.

Un but de la présente invention est de remédier à ces inconvénients.

Un autre but de l'invention est de proposer un système de purification d'un liquide par osmose inverse, présentant une consommation énergétique réduite par rapport aux systèmes de l'état de la technique, pour une pression osmotique donnée.

Un autre but de l'invention est de proposer un système de purification d'un liquide par osmose inverse, en utilisant un fluide moteur de pression plus faible, comparé aux systèmes de l'état de la technique.

Un autre but de l'invention est de proposer un système de purification d'un liquide par osmose inverse, permettant de traiter des liquides présentant des pressions osmotiques plus élevées, comparé aux systèmes de l'état de la technique pour une consommation énergétique donnée.

### EXPOSE DE L'INVENTION

Au moins un des objectifs précités est atteint par un système de purification d'un liquide, dit à traiter, en particulier de l'eau salée, comprenant :
- un module, dit de traitement, pour traiter le liquide à traiter et fournir d'une part un liquide, dit purifié, et d'autre part un liquide, dit résiduel ; et
- un moyen de pressurisation dudit liquide à traiter pour alimenter ledit module de traitement, comprenant :
   ▪ un vérin, dit maitre, prévu pour être entrainé par un fluide, dit moteur, et
   ▪ au moins un vérin, dit esclave, entrainé par ledit vérin maitre, prévu pour recevoir ledit liquide à traiter et le fournir audit module de traitement ;
caractérisé en ce que la section dudit vérin maitre est supérieure à la section dudit au moins un vérin esclave de sorte que pour une pression donnée dudit fluide moteur dans le vérin maitre, une plus grande pression est engendrée sur le liquide à traiter dans le vérin esclave.

Avec le système selon l'invention, la section du vérin maitre, contenant le fluide moteur, est supérieure à la section du vérin esclave, contenant le liquide à traiter. La pression du liquide à traiter en sortie du vérin esclave est donc supérieure à la pression du fluide moteur. Ceci permet de porter la pression du liquide à traiter à une pression supérieure à sa pression osmotique pour une pression du fluide moteur plus faible comparé aux systèmes de l'art antérieur.

De plus, la consommation énergétique du système est plus réduite en comparaison avec les systèmes de l'état de la technique pour une pression osmotique donnée du liquide à traiter.

Le rapport de section dans le moyen de pressurisation permet de porter la pression du liquide à traiter à des pressions plus importantes. Le système selon l'invention permet ainsi de traiter des liquides avec des pressions osmotiques élevées comparé aux systèmes de l'art antérieur pour une même consommation énergétique.

Avantageusement, le module de traitement peut être un module de traitement de liquide à traiter par osmose inverse.

Alternativement, le module de traitement peut être un module de traitement de liquide à traiter par nano filtration.

Dans un mode de réalisation du système selon l'invention, le vérin maitre peut être un vérin à double effet, et le moyen de pressurisation peut comprendre deux vérins esclaves, situés symétriquement de part et d'autre du vérin maitre, et entrainés par ledit vérin maitre.

L'utilisation d'un vérin maître, dit vérin maître principal, associé à deux vérins esclaves, dits vérins esclaves principaux, permet d'augmenter le rendement du système en termes de volume de liquide à traiter, car le vérin maître principal est toujours en situation de travail et ne se trouve jamais en position de repos.

Les vérins esclaves principaux peuvent avoir un volume identique. La disposition symétrique des vérins esclaves principaux permet de traiter ainsi le même volume de liquide à traiter à chaque déplacement du vérin maitre principal.

Avantageusement, le vérin maitre principal et les vérins esclaves principaux peuvent être solidaires et comprennent une tige les traversant, munies des pistons de chaque vérin principal. Cette disposition permet d'assurer l'étanchéité et de limiter les frottements des pistons.

Chaque vérin esclave principal peut comprendre un clapet d'aspiration et un clapet de refoulement du liquide à traiter.

Alternativement, chaque vérin esclave principal peut comprendre un seul clapet pour l'aspiration et le refoulement du liquide à traiter.

Le vérin maitre principal peut entrainer simultanément les deux vérins esclaves principaux, l'un des vérins esclaves principaux pressurisant le liquide à traiter et l'autre vérin esclave principal aspirant un volume de liquide à traiter.

Avantageusement, le système selon l'invention peut comprendre un moyen de pré-pressurisation du liquide à traiter, en amont du moyen de pressurisation.

Pour simplifier la lecture du document, le moyen de pré-pressurisation du liquide à traiter est appelé par la suite moyen de pré-pressurisation primaire. Cette appellation n'implique aucun ordre d'agencement.

Le moyen de pré-pressurisation primaire peut être reliée à une source de liquide à traiter et porter le liquide à traiter à une pression intermédiaire, inférieure à la pression osmotique du liquide et supérieure à la pression initiale du liquide à traiter.

Avantageusement, le moyen de pré-pressurisation est alimenté par le liquide résiduel fourni par le module de traitement.

Ainsi, le rendement énergétique du système est optimisé car la pression du liquide résiduel sortant du moyen de traitement, lors d'un demi-cycle de traitement, est exploitée pour augmenter la pression du liquide à traiter lors d'un demi-cycle suivant.

Dans une version avantageuse du système selon l'invention, le moyen de pré-pressurisation primaire peut comprendre :
- au moins un vérin, dit maitre primaire, relié au module de traitement, et entrainé par le liquide résiduel fourni par le module de traitement, et
- un vérin, dit esclave primaire, contenant le liquide à traiter, entrainé par ledit au moins un vérin maitre primaire.

Préférentiellement, le moyen de pré-pressurisation primaire peut comprendre :
- deux vérins maitres primaires, à simple effet, entrainés alternativement par le liquide résiduel fourni par le module de traitement, et
- un vérin esclave primaire, à double effet, contenant le liquide à traiter, disposé entre les deux vérins maitres primaires, et entrainé alternativement par l'un des vérins maitres primaires.

Le vérin esclave primaire peut comprendre deux clapets de refoulement et deux clapets d'aspiration reliés à une source de liquide à traiter.

Les deux vérins maitres primaires peuvent avoir un volume identique. La disposition symétrique des vérins maitres primaires permet de traiter ainsi le même volume de liquide à traiter à chaque déplacement d'un desdits vérins maitres primaires.

Lorsqu'un vérin maitre primaire est entrainé par son remplissage par le liquide résiduel :
- ledit vérin esclave primaire pré-pressurise le liquide à traiter qu'il contenait, et se remplit à nouveau de liquide à traiter,
- l'autre vérin maitre primaire se vide de liquide résiduel.

Les vérins maitres primaires peuvent être reliés à un distributeur 4/2 à commandes pneumatiques. Le distributeur permet d'alterner le fonctionnement des vérins maitres primaires.

Avantageusement, les vérins maitres et le vérin esclave primaires peuvent être solidaires et comprennent une tige les traversant, munies des pistons de chaque vérin. Cette disposition permet d'assurer l'étanchéité et limiter les frottements des pistons.

En particulier, la section des vérins maîtres primaires est inférieure à la section du vérin esclave primaire.

Préférentiellement, le système selon l'invention peut comprendre un réservoir, dit intermédiaire, contenant du liquide à traiter à une pression intermédiaire, en sortie du moyen de pré-pressurisation primaire. Le réservoir intermédiaire peut être relié au moyen de pressurisation pour l'alimenter.

En particulier, le réservoir intermédiaire peut être relié aux clapets de refoulement des vérins maîtres primaires et aux clapets d'aspiration des vérins esclaves principaux.

Le réservoir intermédiaire stocke du liquide à traiter à une pression intermédiaire et permet ainsi d'alimenter le moyen de pressurisation en liquide à alimenter à la pression intermédiaire de façon continue, en particulier lorsque le moyen de pré-pressurisation primaire est en fin de course.

Dans un mode de réalisation du système selon l'invention, le fluide moteur peut être un fluide compressible, par exemple de l'air, ledit système comprenant un dispositif de compression, disposé en amont du moyen de pressurisation, et agencé pour augmenter la pression du fluide moteur. En particulier, le dispositif de compression peut être un compresseur, un piston actionné par la houle, etc.

Dans un mode de réalisation du système selon l'invention, le fluide moteur peut être un fluide thermique dont la pression varie en fonction de sa température, ledit système comprenant un dispositif thermique, agencé en amont du moyen de pressurisation, et réalisant un échange thermique vers ledit fluide moteur de sorte à augmenter sa pression.

Le dispositif thermique peut être relié au vérin maitre principal. L'augmentation de la pression du fluide moteur entraine le déplacement du vérin maitre principal et donc d'au moins un vérin esclave principal.

En particulier, lorsque le vérin maitre principal est alimenté en fluide moteur :
- l'un desdits vérins esclaves principaux se remplit de liquide à traiter depuis le réservoir intermédiaire par exemple, et
- l'autre desdits vérins esclaves principaux pressurise le liquide à traiter qu'il contenait.

Un distributeur 4/2 à commandes pneumatiques peut être utilisé en aval du dispositif thermique pour diriger le fluide moteur. Suivant le demi-cycle, le vérin maitre principal peut être entrainé alternativement dans un sens puis dans l'autre, entrainant ainsi alternativement l'un des vérins esclaves principaux.

Avantageusement, le dispositif thermique peut comprendre un évaporateur relié à une source de chaleur prévue pour augmenter la pression du fluide thermique par évaporation. La source de chaleur peut comprendre au moins un collecteur solaire, tel qu'un collecteur solaire thermique, de préférence fonctionnant par thermosiphon.

Le dispositif thermique peut comprendre aussi un condenseur relié à un puits d'évacuation de chaleur prévu pour diminuer la pression du fluide thermique par condensation. Le puits d'évacuation de chaleur peut être relié au module de traitement et refroidi par le liquide résiduel en sortie dudit module de traitement. Le puits d'évacuation de chaleur peut aussi être relié à au moins un vérin maitre primaire et refroidi par le liquide résiduel en sortie de ce dernier.

En outre, le dispositif thermique peut comprendre un réservoir de fluide thermique, comprenant le fluide thermique à l'état liquide.

Préférentiellement, le fluide moteur peut être un fluide incompressible, le système selon l'invention peut comprendre :
- un dispositif thermique, agencé en amont du moyen de pressurisation, et réalisant un échange thermique vers un fluide thermique de sorte à augmenter la pression dudit fluide thermique, et
- un moyen de transfert de pression, agencé entre ledit dispositif thermique et le moyen de pressurisation, pour transmettre la pression dudit fluide thermique au fluide moteur.

Le fluide moteur peut être un liquide hydraulique tel que l'eau ou l'huile.

Dans une version préférée de réalisation du système selon l'invention, le moyen de transfert de pression peut comprendre :
- au moins un cylindre, dit de transfert, relié au moyen de pressurisation, et prévu pour accueillir le fluide moteur, et
- au moins un volume déformable, agencé dans ledit cylindre de transfert, et prévu pour accueillir le fluide thermique.

Le volume déformable peut être une séparation physique mobile, rigide ou souple, entrainé par le fluide thermique et entrainant le fluide moteur.

Préférentiellement, le volume déformable peut être une vessie, en particulier élastique, agencée dans un cylindre de transfert.

L'au moins une vessie peut être reliée au dispositif thermique et se déformer réversiblement en fonction de la pression du fluide thermique. Ainsi, lorsque la vessie se remplit du fluide thermique mis sous pression par le dispositif thermique, elle se gonfle, et augmente, par conséquent, la pression du fluide moteur présent dans le cylindre : le fluide moteur est alors poussé dans le vérin maître principal, et l'entraine dans un premier sens. De manière symétrique, lorsque la vessie se vide du fluide thermique, elle se dégonfle : la pression du fluide moteur est relâchée et le fluide moteur est repoussé dans le cylindre par le vérin maître principal, qui se déplace alors dans le sens opposé.

En particulier, le moyen de transfert de pression peut comprendre :
- un premier cylindre de transfert prévu pour accueillir le fluide moteur, munie d'une première vessie agencée dans ledit cylindre prévue pour accueillir le fluide thermique, et
- un deuxième cylindre de transfert prévu pour accueillir le fluide moteur, munie d'une deuxième vessie agencée dans ledit cylindre prévue pour accueillir le fluide thermique.
Le premier cylindre est agencé pour entrainer le vérin maître principal dans un sens et le deuxième cylindre est agencé pour entrainer le vérin maître principal dans le sens contraire. Pour ce faire, les première et deuxième vessies se remplissent et se vident alternativement, à tour de rôle, par le fluide thermique, de sorte que lorsque la première vessie se vide, la deuxième vessie se remplit et *vice versa.* Le fluide moteur est ainsi transvasé d'un cylindre à l'autre en fonction du déplacement du vérin maître principal.

Chacune desdites vessies peut être reliée alternativement à l'évaporateur et le condenseur du dispositif thermique. En particulier, le système selon l'invention peut comprendre un distributeur 4/2 à commandes pneumatiques disposé entre le dispositif thermique et lesdites vessies. Ledit distributeur permet de relier une desdites vessies à l'évaporateur tandis que l'autre vessie est reliée au condenseur et vice versa, de façon commandable. Ainsi, une des vessies peut être à une pression inférieure à l'autre vessie, produisant le déplacement du fluide moteur et donc du vérin maitre principal dans un sens de façon commandable.

En particulier, le dispositif thermique peut comprendre deux vannes commandables agencées en aval, respectivement, du condenseur et de l'évaporateur et reliées au distributeur 4/2. Ces vannes permettent de relier ou d'isoler l'évaporateur, respectivement, le condenseur, à/d'une des vessies élastiques.

Avantageusement, chaque cylindre peut comprendre un orifice d'alimentation ou d'évacuation du fluide moteur situé sur la partie basse dudit cylindre.

De façon similaire, chaque vessie peut comprendre un orifice d'alimentation ou d'évacuation du fluide thermique situé sur la partie basse de ladite vessie.

De plus, le système selon l'invention peut comprendre un dispositif pour augmenter la température du fluide moteur à une température supérieure, préférentiellement proche, de la température d'évaporation du fluide thermique. Ceci permet de réduire la condensation du fluide thermique sur la paroi interne d'au moins une vessie contenant le fluide thermique à une température élevée. Par exemple, ce dispositif de chauffage peut être le dispositif thermique.

Alternativement, ou en plus, le volume déformable, comprenant le fluide thermique, peut être agencé en-dessous du fluide moteur dans le moyen de transfert de pression. Cet agencement permet une évacuation plus simple par gravité des condensats du fluide thermique pouvant se former par condensation à la paroi de ce volume déformable.

Avantageusement, le fluide thermique peut être choisi parmi des hydrocarbures saturés ou non, de type C5 à C10, ou des fluides organiques (R134a, R236fa, R254fa, R600, R601, RC318, R1234yf) ou des mélanges de fluides organiques azéotropiques ou non.

Dans un mode de réalisation, le système selon l'invention peut comprendre un moyen de pré-pressurisation du fluide thermique, disposé en amont du dispositif thermique.

Le moyen de pré-pressurisation, dit moyen de pré-pressurisation secondaire, peut être prévu pour porter la pression du fluide thermique à une pression inférieure ou supérieure à la pression du fluide thermique au niveau de l'évaporateur et supérieure à sa pression au niveau du condenseur.

En particulier, le réservoir de fluide thermique peut être agencé entre le condenseur et le moyen de pré-pressurisation du fluide thermique.

Préférentiellement, le moyen de pré-pressurisation secondaire du fluide thermique peut comprendre :
- au moins un vérin, dit vérin maitre secondaire, entrainé par le liquide résiduel fourni par le module de traitement, et
- un vérin, dit vérin esclave secondaire, contenant le fluide thermique, entrainé par ledit au moins vérin maitre secondaire.

Le moyen de pré-pressurisation secondaire peut utiliser la pression du liquide résiduel en sortie du module de traitement pour pré-pressuriser le fluide thermique.

Dans une version de réalisation préférée du système selon l'invention, le moyen de pré-pressurisation secondaire peut comprendre :
- deux vérins maitres secondaires, entrainés à tour de rôle par le liquide résiduel fourni par le module de traitement, et
- un vérin esclave secondaire contenant le fluide thermique, entrainé alternativement par un des vérins maitres secondaires.

Le vérin esclave secondaire peut comprendre deux clapets d'aspiration reliés au réservoir du fluide thermique et deux clapets de refoulement reliés à l'évaporateur.

Les deux vérins maitres secondaires peuvent avoir un volume identique. La disposition symétrique des vérins maitres secondaires permet de traiter ainsi le même volume de fluide thermique à chaque déplacement d'un desdits vérins maitres secondaires.

Lorsqu'un vérin maitre secondaire est entrainé par son remplissage par le liquide résiduel :
- le vérin esclave secondaire pré-pressurise le fluide thermique qu'il contenait, et se remplit à nouveau de fluide thermique en provenance du réservoir de fluide thermique,
- l'autre vérin maitre secondaire se vide de liquide résiduel.

Les vérins maitres secondaires peuvent être reliés à un distributeur 4/2 à commandes pneumatiques. Le distributeur permet d'alterner le fonctionnement des vérins maitres secondaires.

Avantageusement, les vérins maitres et le vérin esclave peuvent être solidaires et comprennent une tige les traversant, munies des pistons de chaque vérin. Cette disposition permet d'assurer l'étanchéité et limiter les frottements des pistons.

De plus, les vérins maitres secondaires peuvent être reliés au puits d'évacuation de chaleur pour refroidir le condenseur parle liquide résiduel en sortie d'un des vérins maîtres secondaires.

En particulier, le système selon l'invention peut comprendre un dispositif de réglage du débit de liquide résiduel pour contrôler la vitesse des déplacements des vérins maitres, respectivement, primaires et secondaires. Ce dispositif peut comprendre une vanne réglable agencée en aval d'un régleur ou d'un réducteur de pression aval, agissant sur le débit du liquide résiduel sortant des moyens de pré-pressurisation.

Le dispositif de réglage du débit peut être agencé en aval du dispositif thermique, en particulier en aval du puits d'évacuation de chaleur du condenseur.

Suivant un autre aspect de l'invention, il est proposé un procédé de purification par osmose inverse d'un liquide, dit à traiter, en particulier de l'eau salée, comprenant au moins une itération des étapes suivantes :
- pressurisation du liquide à traiter, et
- fourniture dudit liquide à traiter pressurisé à un module de traitement par osmose inverse fournissant un premier liquide, dit purifié, et un deuxième liquide, dit résiduel ;
caractérisé en ce que l'étape de pressurisation est réalisée par au moins un vérin, dit esclave, solidaire d'un vérin, dit maitre, de section plus grande que la section dudit vérin esclave, et recevant un fluide moteur.

Avantageusement, le module de traitement peut être un module de traitement de liquide à traiter par osmose inverse ou par nanofiltration.

Dans une version de réalisation du procédé selon l'invention, le vérin maitre peut être un vérin à double effet, et peut entrainer deux vérins esclaves de sorte que lorsqu'un des vérins esclave est vidé de liquide à traiter l'autre vérin esclave est rempli de liquide à traiter, de manière simultanée.

Dans un mode de réalisation, le procédé selon l'invention peut comprendre une étape de pré-pressurisation du liquide à traiter, avant l'étape de pressurisation du liquide à traiter, réalisée par un vérin, dit esclave, contenant le liquide à traiter, solidaire d'au moins un vérin, dit maitre, recevant le liquide résiduel.

Dans un mode de réalisation du procédé selon l'invention, le fluide moteur peut être un fluide compressible, par exemple de l'air, ledit procédé comprenant une étape d'augmentation de la pression dudit fluide moteur par compression.

Dans une version de réalisation du procédé selon l'invention, le fluide moteur peut être un fluide thermique, ledit procédé comprenant une étape d'augmentation de la pression dudit fluide moteur par échange thermique.

Dans une version préférée du procédé selon l'invention, le fluide moteur peut être un fluide incompressible, ledit procédé comprenant les étapes suivantes :
- une étape d'échange thermique vers un fluide thermique pour augmenter la pression dudit fluide thermique, et
- une étape de transfert de pression depuis ledit fluide thermique vers ledit fluide moteur.

Avantageusement, l'étape de transfert de pression peut être réalisée par au moins un cylindre contenant le fluide moteur et une vessie élastique, agencée dans ledit cylindre, et contenant le fluide thermique.

Dans un mode de réalisation, le procédé selon l'invention peut comprendre une étape de pré-pressurisation du fluide thermique réalisée par un vérin, dit esclave, contenant le fluide thermique, solidaire d'au moins un vérin, dit maitre, recevant le liquide résiduel.

Dans une version de réalisation, le procédé selon l'invention peut comprendre deux demi-cycles, chaque demi-cycle comprenant les phases suivantes :
- une phase I comprenant simultanément :
   ▪ une étape d'augmentation de la pression du fluide thermique par échange thermique,
   ▪ une étape de transfert de pression depuis ledit fluide thermique vers ledit fluide moteur ;
- une phase II comprenant simultanément :
   ▪ une étape d'augmentation de la pression du fluide thermique par échange thermique,
   ▪ une étape de transfert de pression depuis ledit fluide thermique vers ledit fluide moteur,
   ▪ une étape de pressurisation du liquide à traiter,
   ▪ une étape de purification du liquide à traiter par osmose inverse,
   ▪ une étape de pré-pressurisation du fluide thermique ;
- une phase III comprenant simultanément :
   ▪ une étape d'augmentation de la pression du fluide thermique par échange thermique,
   ▪ une étape de transfert de pression depuis ledit fluide thermique vers ledit fluide moteur,
   ▪ une étape de pressurisation du liquide à traiter,
   ▪ une étape de purification du liquide à traiter par osmose inverse ; et
   ▪ une étape de pré-pressurisation du liquide à traiter ; et
- une phase IV comprenant une étape de pré-pressurisation du liquide à traiter.

En particulier, les phases II et III peuvent se succéder dans cet ordre lors d'un demi-cycle du procédé.

Alternativement, les phases III et II peuvent se succéder dans cet ordre lors d'un demi-cycle du procédé.

### DESCRIPTION DES FIGURES ET MODES DE REALISATION

D'autres avantages et caractéristiques apparaîtront à l'examen de la description détaillée d'exemples nullement limitatifs, et des dessins annexés sur lesquels :
- la FIGURE 1 est une représentation schématique d'un premier exemple du système selon l'invention ;
- la FIGURE 2 est une représentation schématique d'un deuxième exemple du système selon l'invention ;
- la FIGURE 3 est une représentation schématique d'un troisième exemple du système selon l'invention ;
- la FIGURE 4 est une représentation schématique d'un exemple du procédé selon l'invention ; et
- les FIGURES 5a, 5b, 5c et 5d sont des représentations schématiques de l'exemple du procédé selon l'invention mis en œuvre par le troisième exemple du système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

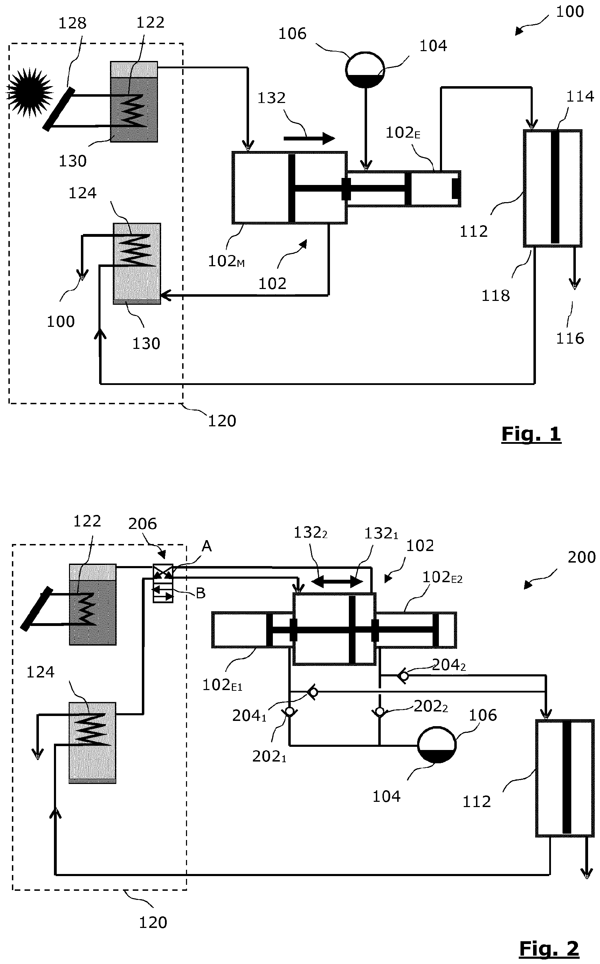

La FIGURE 1 est une représentation schématique d'un premier exemple du système selon l'invention.

Le système 100 de la FIGURE 1 comprend un moyen de pressurisation 102 de liquide à traiter 104, provenant d'une source 106.

Le moyen de pressurisation 102 comprend un vérin maitre 102_{M} entrainant un vérin esclave 102_{E}, comprenant le liquide à traiter 104. Le vérin maitre 102_{M} a une section plus grande que la section du vérin esclave 102_{E}. Lorsque le vérin esclave 102_{E} est entrainé par le vérin maitre 102_{M}, le liquide à traiter 104 est pressurisé et acheminé vers un module de traitement 112 par osmose inverse.

Le module de traitement 112 comprend une membrane 114, permettant de produire un liquide purifié à la sortie 116 et un liquide résiduel à la sortie 118 dudit module 112.

Le système 100 comprend en outre un dispositif thermique 120 relié au moyen de pressurisation 102. Le dispositif thermique comprend un évaporateur 122 et un condenseur 124. L'évaporateur 122 est relié à un collecteur solaire thermique 128 induisant l'évaporation d'un fluide thermique 130 qui est un fluide moteur dans cet exemple. Le condenseur 124 est refroidi par le liquide résiduel en sortie 118 du module de traitement 112, induisant la condensation du fluide thermique 130.

La différence de pression induite par l'évaporateur 122 et le condenseur 124 entraine le déplacement du vérin maitre 102_{M} dans la direction 132.

La FIGURE 2 est une représentation schématique d'un deuxième exemple du système selon l'invention.

Le système 200 comprend les mêmes éléments que le système 100 de la FIGURE 1. A la différence de ce dernier, le moyen de pressurisation 102 du système 200 comprend deux vérins esclaves 102_{E1}-102_{E2}. De plus, le vérin maitre 102_{M} est un vérin à double effet. Ainsi, chacun des deux vérins esclaves 102_{E} peut être entrainé par le vérin maitre 102M dans deux directions opposées 132₁-132₂.

Chacun des vérins esclaves 102_{E1} et 102E2 est muni d'un clapet d'aspiration, respectivement 202₁ et 202₂ et d'un clapet de refoulement, respectivement 204₁ et 204₂. Les clapets d'aspiration 202 sont reliés à la source 106 de liquide à traiter 104, pour alimenter les vérins esclaves 102_{E}. Les clapets de refoulement 204 sont reliés au module de traitement 112 alimentant ce dernier de liquide à traiter 104 pressurisé.

Le vérin maitre 102_{M} est relié au dispositif thermique 120 au travers d'un distributeur 206. Le distributeur 206 en position A permet de relier l'évaporateur 122 à une chambre, dite gauche, du vérin maitre 102_{M} et le condenseur 124 est relié à une chambre, dite droite, du vérin maitre 102_{M}, et inversement lorsque le distributeur 206 est en position B.

Lorsque le distributeur 206 est en position A :
- le vérin maitre 102_{M} se déplace dans la direction 132₁,
- le vérin esclave 102_{E2} se remplit de liquide à traiter 104 à travers le clapet d'aspiration 202₂, et
- le vérin esclave 102_{E1} pressurise le liquide à traiter 104, et l'envoie au module de traitement 112 par le clapet de refoulement 204₁.

De façon inverse, lorsque le distributeur 206 est en position B :
- le vérin maitre 102_{M} se déplace dans la direction 132₂,
- le vérin esclave 102_{E1} se remplit de liquide à traiter 104 à travers le clapet d'aspiration 202₁, et
- le vérin esclave 102_{E2} pressurise le liquide à traiter 104, et l'envoie au module de traitement 112 par le clapet de refoulement 204₂.

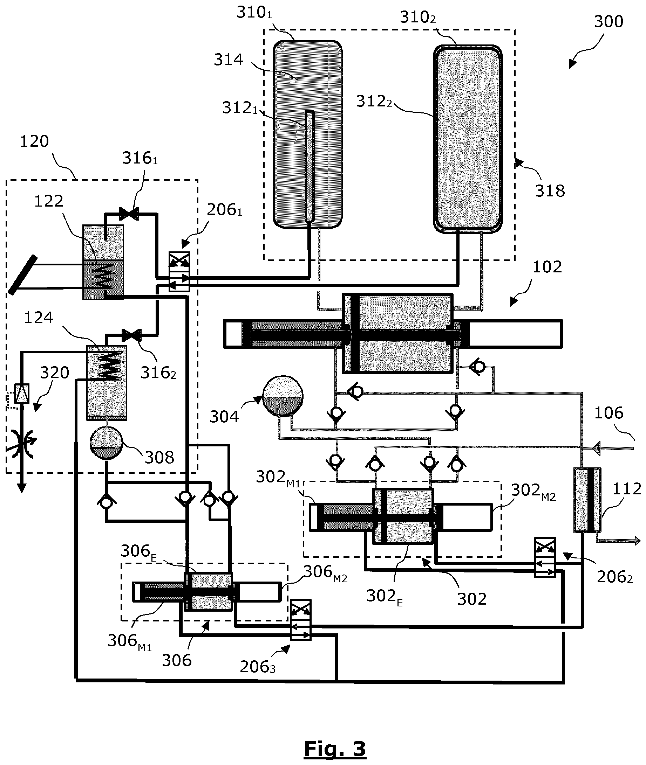

La FIGURE 3 est une représentation schématique d'un troisième exemple du système selon l'invention.

Le système 300 de la FIGURE 3 comprend les mêmes éléments que le système 200 de la FIGURE 2.

Le système 300 comprend en outre un moyen de pré-pressurisation 302 du liquide à traiter 104. Le moyen de pré-pressurisation 302 comprend deux vérins maitres 302_{M1}-302_{M2} entrainant un vérin esclave 302_{E} comprenant le liquide à traiter 104. Les vérins maitres 302_{M} sont alternativement reliés à la sortie 118 du module de traitement 112 et au condenseur 124, à travers un distributeur 206₂. Les vérins maitres 302_{M} sont alternativement entrainés par le liquide résiduel en fonction de la position (A ou B) du distributeur 206₂. Lorsque le vérin esclave 302_{E} est entrainé par un vérin maitre 302_{M}, simultanément il pré-pressurise le liquide à traiter 104 et se remplit à nouveau de liquide à traiter 104. Le liquide à traiter 104 pré-pressurisé est stocké dans un réservoir 304 à une pression intermédiaire, supérieure à la pression à la source 106 du liquide à traiter 104.

Le réservoir 304 est relié au moyen de pressurisation 102 et fourni les vérins esclaves 102_{E} en liquide à traiter 104 pré-pressurisé.

Le système 300 comprend aussi un moyen de pressurisation 306 du fluide thermique 130. Le moyen de pressurisation 306 comprend deux vérins maitres 306_{M1}-306_{M2} entrainant un vérin esclave 306_{E} contenant du fluide thermique 130. Ils sont alternativement reliés à la sortie 118 du module de traitement 112 et au condenseur 124, à travers un distributeur 206₃. Le vérin esclave 306_{E} est relié à un réservoir 308 contenant du fluide thermique 130 condensé par le condenseur 124.

Les vérins maitres 306_{M} sont alternativement entrainés par le liquide résiduel en fonction de la position (A ou B) du distributeur 206₃. Lorsque le vérin esclave 306_{E} est entrainé par un vérin maitre 306_{M}, il pré-pressurise le fluide thermique 130 et se remplit à nouveau de fluide thermique 130.Le fluide thermique 130 pré-pressurisé est transvasé dans l'évaporateur 122.

Le système 300 comprend un moyen de transfert de pression 318 agencé en amont du moyen de pressurisation 102 et du dispositif thermique 120. Le moyen de transfert 318 comprend deux cylindres 310₁-310₂ de transfert de pression. Chaque cylindre 310₁-310₂ comprend une vessie élastique, respectivement, 312₁ et 312₂. Les cylindres 310 sont reliés au vérin maitre 102_{M} du moyen de pressurisation 102. En particulier, le cylindre 310₁ est relié à la chambre gauche du vérin maitre 102_{M} et le cylindre 310₂ est relié à la chambre droite du vérin maitre 102_{M}. Les cylindres 310 de transfert comprennent un liquide moteur 314, non-compressible transférable dans le vérin maitre 102_{M} pour produire son déplacement. Les vessies 312 sont reliées au dispositif thermique 120 au travers d'un distributeur 206₁. Les vessies 312 sont alternativement reliées à l'évaporateur 122 et le condenseur 124. De plus, des vannes 316₁-316₂ sont agencées, respectivement, en aval de l'évaporateur 122 et du condenseur 124. Les vannes 316 permettent d'isoler ou de relier l'évaporateur 122 et du condenseur 124 à l'une des vessies 312.

Les vessies 312 comprennent le fluide thermique 130. Les vessies 310 se déforment en fonction de la pression du fluide thermique 130. La déformation d'une des vessies 312 induit le déplacement du fluide moteur 314 présent dans un des cylindres 310 et donc le déplacement du vérin maitre 102_{M}.

Par ailleurs, le système 300 comprend un dispositif de réglage du débit 320 de liquide résiduel. Ce dispositif de réglage 320 comprend une vanne réglable en amont d'un réducteur de pression aval. Le dispositif de réglage de débit 320 permet de contrôler la vitesse des déplacements des vérins 302_{M} et 306_{M}.

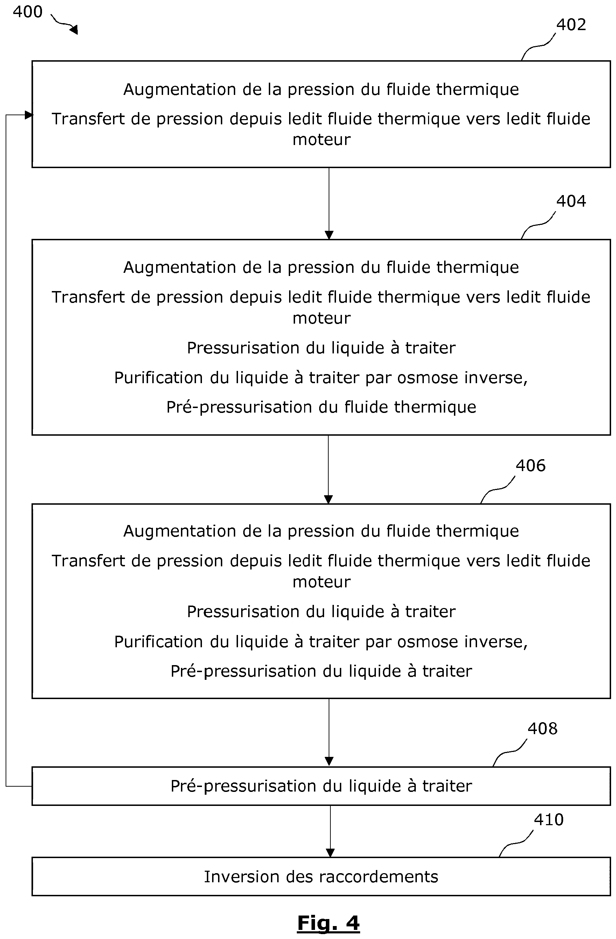

La FIGURE 4 est une représentation schématique d'un exemple du procédé selon l'invention.

Le procédé 400 peut être mis en œuvre, par exemple, par le système 300 de la FIGURE 3.

Le procédé 400 comprend deux demi-cycles, identiques dans leur déroulement et pour lesquels le rôle des cylindres de transfert 310 est inversé.

Chaque demi-cycle comprend simultanément une phase 402 comprenant une étape d'augmentation de la pression du fluide thermique par échange thermique et une étape de transfert de pression depuis ledit fluide thermique vers ledit fluide moteur.

Un demi-cycle du procédé 400 comprend ensuite une phase 404 comprenant simultanément les étapes suivantes :
- une augmentation de la pression du fluide thermique par échange thermique,
- un transfert de pression depuis ledit fluide thermique vers ledit fluide moteur,
- une pressurisation du liquide à traiter
- une purification du liquide à traiter par osmose inverse, et
- une pré-pressurisation du fluide thermique.

Un demi-cycle du procédé 400 comprend ensuite une phase 406 qui consiste simultanément en :
- une augmentation de la pression du fluide thermique par échange thermique,
- un transfert de pression depuis ledit fluide thermique vers ledit fluide moteur,
- une pressurisation du liquide à traiter,
- une purification du liquide à traiter par osmose inverse, et
- une pré-pressurisation du liquide à traiter.

Chaque demi-cycle du procédé comprend une phase 408 comprenant une étape de pré-pressurisation du liquide à traiter.

Un demi-cycle du procédé 400 se termine par une étape 410 d'inversion des raccordements pour effectuer un second demi-cycle en inversant les rôles des cylindres de transfert.

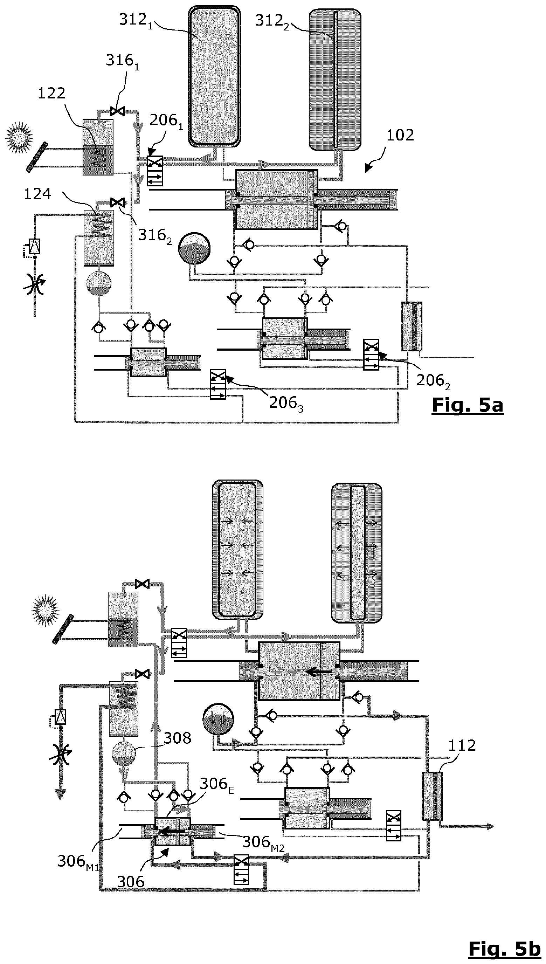

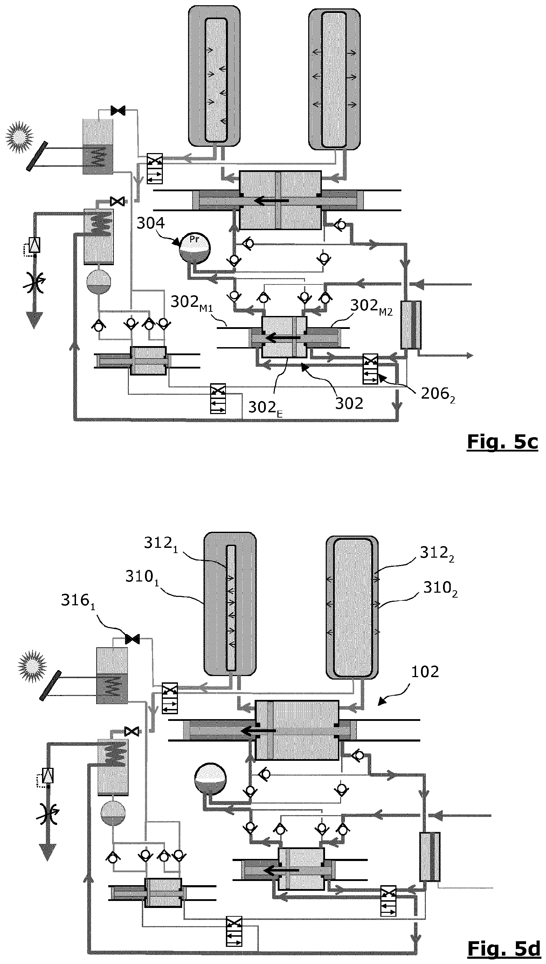

Les FIGURES 5a, 5b, 5c et 5d sont des représentations schématiques de l'exemple du procédé selon l'invention mis en œuvre par le troisième exemple du système selon l'invention.

Les FIGURES 5a, 5b, 5c et 5d représentent respectivement les phases 402, 404, 406 et 408 du procédé 400 de la FIGURE 4.

Dans la phase 402 représentée sur la FIGURE 5a, le distributeur 206₁ est en position A, tandis que les distributeurs 206₂ et 206₃ sont en position B. Les vannes 316 sont ouvertes. Les vessies312₁ et 312₂ sont respectivement reliées au condenseur 124 et à l'évaporateur 122. En raison de l'évaporation du fluide thermique 130 dans l'évaporateur, la pression et donc le volume de la vessie 312₂ augmentent. Inversement, la pression et le volume de la vessie 312₁ diminuent par condensation du fluide thermique 130 dans le condenseur 124. La mise sous pression des vessies 312 induit le déplacement du liquide moteur 314 et donc la mise sous pression du vérin maitre 102_{M} du moyen de pressurisation 102.

Dans la phase 404 représentée sur la FIGURE 5b, le distributeur 206₃ est mis en position A. Cette disposition permet l'écoulement du liquide à traiter 104 dans le système 300, en particulier, le déplacement du vérin maitre 102_{M} dans la direction 132₂ et donc la pressurisation du liquide à traiter 104 par le moyen de pressurisation 102.

Le liquide à traiter 104 en sortie du moyen de pressurisation 102 a une pression supérieure à sa pression osmotique. Le module de traitement 112 produit donc de l'eau douce. Le liquide résiduel en sortie 118 du module de traitement 112 entraine le vérin maitre 306_{M1}. Le vérin maitre 306_{M1} entraine avec lui le vérin esclave 306_{E} et l'autre vérin maitre 306_{M2}. Le vérin esclave 306_{E} pré-pressurise le fluide thermique 130 et le transvase dans l'évaporateur 122 et aspire à nouveau une quantité du fluide thermique 130 depuis le réservoir 308. L'autre vérin maitre 306_{M2} chasse le liquide résiduel qu'il contenait en l'envoyant vers le condenseur 124 pour le refroidir. Cette phase 404 se termine lorsque le vérin maitre 306_{M1} est en fin de course.

Dans la phase 406 représentée sur la FIGURE 5c, le distributeur 206₂ est mis en position A. Cette disposition permet l'écoulement du liquide à traiter 104 dans le système 300.En particulier, le déplacement du vérin maitre 102_{M} et donc la pressurisation du liquide à traiter 104 par le moyen de pressurisation 102.

Le liquide à traiter 104 en sortie du moyen de pressurisation 102 a une pression supérieure à sa pression osmotique. Le module de traitement 112 continue de produire de l'eau douce. Le liquide résiduel en sortie 118 du module de traitement 112 entraine le vérin maitre 306_{M1} du moyen de pré-pressurisation 302. Le vérin maitre 306_{M1} entraine avec lui le vérin esclave 306_{E} et l'autre vérin maitre 306_{M2}. Le vérin esclave 306_{E} pré-pressurise le liquide à traiter 104 qu'il contenait et le transvase dans le réservoir 304 à une pression légèrement inférieure à sa pression osmotique, et aspire à nouveau une quantité de liquide à traiter 104. Simultanément, le vérin maitre 306_{M1} chasse le liquide résiduel qu'il contenait en l'envoyant vers le condenseur 124 pour le refroidir. Cette phase 406 se termine lorsque le volume de la vessie 312₂ atteint un volume permettant une détente adiabatique.

Enfin dans la phase 408 représentée sur la FIGURE 5d, la vanne 316₁ est fermée, isolant ainsi la vessie 312₂ de l'évaporateur 122. La vessie 312₂ contenant un volume constant de fluide thermique 130 subit une détente adiabatique de façon à occuper tout le volume du cylindre 310₂. Cette détente permet la continuité du déplacement du vérin maitre 102_{M} et donc la pressurisation du liquide à traiter 104 et la production d'eau douce. Par ailleurs, le vérin maitre 302_{M1} continue d'être entrainé par le liquide résiduel pour pré-pressuriser le liquide à traiter 104. Cette phase 408 se termine lorsque les vérins maitre 102_{M} et 302_{M1} arrivent en fin de course.

Bien sûr, l'invention n'est pas limitée aux exemples qui viennent d'être décrits et de nombreux aménagements peuvent être apportés à ces exemples sans sortir du cadre de l'invention.

## Revendications

1. Système (100;200;300) de purification d'un liquide, dit à traiter (104), en particulier de l'eau salée, comprenant :
- un module (112), dit de traitement, pour traiter le liquide à traiter (104) et fournir d'une part un liquide, dit purifié, et d'autre part un liquide, dit résiduel ; et
- un moyen de pressurisation (102) dudit liquide à traiter (104) pour alimenter ledit module de traitement (112), comprenant :
▪ un vérin (102_{M}), dit maitre, prévu pour être entrainé par un fluide (130;314), dit moteur, et
▪ au moins un vérin (102_{E}), dit esclave, entrainé par ledit vérin maitre (102_{M}), prévu pour recevoir ledit liquide à traiter (104) et le fournir audit module de traitement (112) ;
**caractérisé en ce que** la section dudit vérin maitre (102_{M}) est supérieure à la section dudit au moins un vérin esclave (102_{E}) de sorte que pour une pression donnée dudit fluide moteur (130;314) dans le vérin maitre (102_{M}), une plus grande pression est engendrée sur le liquide à traiter (104) dans le vérin esclave (102_{E}), et **en ce qu'**il comprend un moyen de pré-pressurisation (302) du liquide à traiter (104), en amont du moyen de pressurisation (102) ; ledit moyen de pré-pressurisation (302) comprenant :
- au moins un vérin (302_{M}), dit maitre, relié au module de traitement (112), et entrainé par le liquide résiduel fourni par le module de traitement (112), et
- un vérin (302_{E}), dit esclave, contenant le liquide à traiter, entrainé par ledit au moins un vérin maitre (302_{M}).

2. Système (100;200;300) selon la revendication précédente, **caractérisé en ce que** le module de traitement (112) est un module de traitement de liquide à traiter par osmose inverse.

3. Système (100;200;300) selon l'une quelconque des revendications précédentes, **caractérisé en ce que** le vérin maitre (102_{M}) est un vérin à double effet, et le moyen de pressurisation (102) comprend deux vérins esclaves (102_{E1}; 102E2), situés symétriquement de part et d'autre du vérin maitre (102_{M}), et entrainés par ledit vérin maitre (102_{M}).

4. Système (300) selon l'une quelconque des revendications précédentes, **caractérisé en ce qu'**il comprend un réservoir (304), dit intermédiaire, agencé pour stocker le liquide à traiter (104) à une pression intermédiaire, inférieure à la pression osmotique, en sortie du moyen de pré-pressurisation (302) du liquide à traiter (104) et pour alimenter le moyen de pressurisation (102) en liquide à traiter (104).

5. Système (100;200) selon l'une quelconque des revendications précédentes, **caractérisé en ce que** le fluide moteur (130) est un fluide thermique dont la pression varie en fonction de sa température, ledit système comprenant un dispositif thermique (120), agencé en amont du moyen de pressurisation (102), et réalisant un échange thermique vers ledit fluide moteur (130) de sorte à augmenter sa pression.

6. Système (300) selon l'une quelconque des revendications 1 à 4, **caractérisé en ce que** le fluide moteur (314) est un fluide incompressible, ledit système (300) comprenant :
- un dispositif thermique (120), agencé en amont du moyen de pressurisation (102), et réalisant un échange thermique vers un fluide thermique (130) de sorte à augmenter la pression dudit fluide thermique (130), et
- un moyen de transfert de pression (318), agencé entre ledit dispositif thermique (120) et le moyen de pressurisation (102), pour transmettre la pression dudit fluide thermique (130) au fluide moteur (314).

7. Système (300) selon la revendication précédente, **caractérisé en ce que** le moyen de transfert de pression (318) comprend :
- au moins un cylindre (310), dit de transfert, relié au moyen de pressurisation (102), et prévu pour accueillir le fluide moteur (314), et
- au moins un volume (312), déformable, agencé dans ledit cylindre de transfert (310), et prévu pour accueillir le fluide thermique (130).

8. Système (100;200;300) selon l'une quelconque des revendications 5 à 7, **caractérisé en ce que** le fluide thermique (130) est choisi parmi des hydrocarbures saturés ou non, de type C5 à C10, ou des fluides organiques (R134a, R236fa, R254fa, R600, R601, RC318, R1234yf) ou des mélanges de fluides organiques azéotropiques ou non.

9. Système (300) selon l'une quelconque des revendications 5 à 8, **caractérisé en ce qu'**il comprend un moyen de pré-pressurisation (306) du fluide thermique, disposé en amont du dispositif thermique (120).

10. Système (300) selon la revendication précédente, **caractérisé en ce que** le moyen de pré-pressurisation (306) du fluide thermique comprend :
- au moins un vérin (306_{M}), dit maitre, entrainé par le liquide résiduel fourni par le module de traitement (112), et
- un vérin (306_{E}), dit esclave, contenant le fluide thermique (130), entrainé par ledit au moins vérin maitre (306_{M}).

11. Procédé (400) de purification d'un liquide (104), dit à traiter, en particulier de l'eau salée, comprenant au moins une itération des étapes suivantes :
- pressurisation du liquide à traiter (104), et
- fourniture dudit liquide à traiter (104) pressurisé à un module de traitement (112) fournissant un premier liquide, dit purifié, et un deuxième liquide, dit résiduel ;
**caractérisé en ce que** l'étape de pressurisation est réalisée par au moins un vérin (102_{E}), dit esclave, solidaire d'un vérin (102_{M}), dit maitre, de section plus grande que la section dudit vérin esclave (102_{E}), et recevant un fluide moteur (130;314) et **en ce qu'**il comprend une étape de pré-pressurisation du liquide à traiter (104), avant l'étape de pressurisation du liquide à traiter (104), réalisée par un vérin (302_{E}), dit esclave, contenant le liquide à traiter (104), solidaire d'au moins un vérin (302_{M}), dit maitre, recevant le liquide résiduel.

12. Procédé (400) selon la revendication précédente, **caractérisé en ce que** le module de traitement est un module de traitement de liquide à traiter par osmose inverse.

13. Procédé (400) selon l'une quelconque des revendications 11 ou 12, **caractérisé en ce que** le vérin maitre (102_{M}) est un vérin à double effet, et entraine deux vérins esclaves (102_{E1}; 102_{E1}) de sorte que lorsqu'un des vérins esclave (102_{E1}; 102_{E1}) est vidé de liquide à traiter (104) l'autre vérin esclave (102_{E1}; 102_{E1}) est rempli de liquide à traiter (104), de manière simultanée.

14. Procédé (400) selon l'une quelconque des revendications 11 à 13, **caractérisé en ce que** le fluide moteur (130) est un fluide thermique, ledit procédé (400) comprenant une étape d'augmentation de la pression dudit fluide moteur (130) par échange thermique.

15. Procédé (400) selon l'une quelconque des revendications 11 à 13, **caractérisé en ce que** le fluide moteur (314) est un fluide incompressible, ledit procédé comprenant les étapes suivantes :
- une étape d'échange thermique vers un fluide thermique (130) pour augmenter la pression dudit fluide thermique (130), et
- une étape de transfert de pression depuis ledit fluide thermique (130) vers ledit fluide moteur (314).

16. Procédé (400) selon la revendication précédente, **caractérisé en ce que** l'étape de transfert de pression est réalisée par au moins un cylindre (310) contenant le fluide moteur (314) et une vessie élastique (312), agencée dans ledit cylindre (310), et contenant le fluide thermique (130).

17. Procédé (400) selon l'une quelconque des revendications 14 à 16, **caractérisé en ce qu'**il comprend une étape de pré-pressurisation du fluide thermique (130) réalisée par un vérin (306_{E}), dit esclave, contenant le fluide thermique (130), solidaire d'au moins un vérin (306_{M}), dit maitre, recevant le liquide résiduel.

18. Procédé selon l'une quelconque des revendications 15 à 17, **caractérisé en ce qu'**il comprend deux demi-cycles, chaque demi-cycle comprenant les phases suivantes :
- une phase I (402) comprenant simultanément :
▪ une étape d'augmentation de la pression du fluide thermique (130) par échange thermique,
▪ une étape de transfert de pression depuis ledit fluide thermique (130) vers ledit fluide moteur (314) ;
- une phase II (404) comprenant simultanément :
▪ une étape d'augmentation de la pression du fluide thermique (130) par échange thermique,
▪ une étape de transfert de pression depuis ledit fluide thermique (130) vers ledit fluide moteur (314),
▪ une étape de pressurisation du liquide à traiter (104),
▪ une étape de purification du liquide à traiter (104) par osmose inverse,
▪ une étape de pré-pressurisation du fluide thermique (130) ;
- une phase III (406) comprenant simultanément :
▪ une étape d'augmentation de la pression du fluide thermique (130) par échange thermique,
▪ une étape de transfert de pression depuis ledit fluide thermique (130) vers ledit fluide moteur (314),
▪ une étape de pressurisation du liquide à traiter (104),
▪ une étape de de purification du liquide à traiter (104) par osmose inverse ; et
▪ une étape de pré-pressurisation du liquide à traiter (104) ; et
- une phase IV (408) comprenant une étape de pré-pressurisation du liquide à traiter (104).

## Patentansprüche

1. Flüssigkeitsreinigungssystem genanntes System (100;200;300) zum Behandeln einer zu behandelnde Flüssigkeit (104), insbesondere Salzwasser, mit:
- einem Behandlungsmodul genannten Modul (112), um die zu behandelnde Flüssigkeit (104) zu behandeln und zum eine, gereinigte Flüssigkeit genannte Flüssigkeit und zum anderen eine, Restflüssigkeit genannte, Flüssigkeit bereitzustellen; und
- einem Verdichtungsmittel (102) der zu behandelnden Flüssigkeit (104), um das Behandlungsmodul (112) zu speisen, wobei das Behandlungsmodul (112) das Folgende aufweist:
• einen Leit-Kolben genannten Kolben (102_{M}), der eingerichtet ist, um von einem Antriebsfluid (130;314) angetrieben zu werden, und
• zumindest einen Folge-Kolben genannten Kolben (102_{E}), der von dem Leit-Kolben (102_{M}) angetrieben wird und eingerichtet ist, um die zu behandelnde Flüssigkeit (104) aufzunehmen und dem Behandlungsmodul (112) bereitzustellen;
**dadurch gekennzeichnet, dass** der Querschnitt des Leit-Kolbens (102_{M}) größer ist als der Querschnitt des zumindest einen Folge-Kolbens (102_{E}), sodass für einen gegebenen Druck des Antriebsfluides (130;314) in dem Leit-Kolben (102_{M}) ein größerer Druck der zu behandelnden Flüssigkeit in dem Folge-Kolben erzeugt wird, und dass das System weiterhin ein Vorverdichtungsmittel (302) der zu behandelnden Flüssigkeit (104) aufweist, das dem Verdichtungsmittel (102) vorgelagert ist; wobei das Vorverdichtungsmittel (302) das Folgende aufweist:
- zumindest einen Leit-Kolben (302_{M}), der mit dem Behandlungsmodul (112) verbunden ist und durch die von dem Behandlungsmodul (112) bereitgestellte Restflüssigkeit angetrieben wird, und
- einen Folge-Kolben (302_{E}), der die zu behandelnde Flüssigkeit enthält und durch den zumindest einen Leit-Kolben (302_{M}) angetrieben wird.

2. System (100;200;300) nach dem vorstehenden Anspruch, **dadurch gekennzeichnet, dass** das Behandlungsmodul (112) ein Behandlungsmodul für zu behandelnde Flüssigkeit durch Umkehrosmose ist.

3. System (100;200;300) nach einem der vorstehenden Ansprüche, **dadurch gekennzeichnet, dass** der Leit-Kolben (102_{M}) ein doppeltwirkender Kolben ist, und das Verdichtungsmittel (102) zwei symmetrisch zu jeder Seite des Leit-Kolbens (102_{M}) angeordnete und durch den Leit-Kolben (102_{M}) angetriebene Folge-Kolben (102_{E}) aufweist.

4. System (300) nach einem der vorstehenden Ansprüche, **dadurch gekennzeichnet, dass** es ein Zwischenreservoir genanntes Reservoir (304) aufweist, das eingerichtet ist, um die zu behandelnde Flüssigkeit (104) bei einem Zwischendruck, der kleiner ist als der osmotische Druck, am Ausgang des Vorverdichtungsmittels (302) der zu behandelnden Flüssigkeit (104) zu speichern und um das Verdichtungsmittel (102) mit der zu behandelnden Flüssigkeit (104) zu speisen.

5. System (100;200) nach einem der vorstehenden Ansprüche, **dadurch gekennzeichnet, dass** das Antriebsfluid (130) ein thermisches Fluid ist, dessen Druck sich in Abhängigkeit seiner Temperatur ändert, wobei das System eine thermische Vorrichtung (120) aufweist, die dem Verdichtungsmittel (102) vorgelagert angeordnet ist und einen thermischen Austausch zu dem Antriebsfluid (130) bewirkt, um dessen Druck zu erhöhen.

6. System (300) nach einem der vorstehenden Ansprüche 1 bis 4, **dadurch gekennzeichnet, dass** das Antriebsfluid (314) ein inkompressibles Fluid ist, wobei das System (300) aufweist:
- eine thermische Vorrichtung (120), die dem Verdichtungsmittel (102) vorgelagert angeordnet ist und einen thermischen Austausch zu einem thermischen Fluid (130) durchführt, um den Druck des thermischen Fluides (130) zu erhöhen, und
- ein Druckübertragungsmittel (318), das zwischen der thermischen Vorrichtung (120) und dem Verdichtungsmittel (102) angeordnet ist, um den Druck des thermischen Fluides (130) auf das Antriebsfluid (314) zu übertragen.

7. System (300) nach dem vorstehenden Anspruch, **dadurch gekennzeichnet, dass** das Druckübertragungsmittel (318) aufweist:
- zumindest einen mit dem Verdichtungsmittel (102) verbundenen, Transferzylinder genannten Zylinder (310), der für das Aufnehmen des Antriebsfluides (314) vorgesehen ist, und
- zumindest ein verformbares Volumen (312), das in dem Transferzylinder (310) angeordnet ist und für das Aufnehmen des thermischen Fluides (130) vorgesehen ist.

8. System (100;200;300) nach einem der vorstehenden Ansprüche 5 bis 7, **dadurch gekennzeichnet, dass** das thermische Fluid (130) aus gesättigten oder ungesättigten Kohlenwasserstoffen des Typs C5 bis C10, oder aus organischen Flüssigkeiten (R134a, R236fa, R254fa, R600, R601, RC318, R1234yf), oder aus Mischungen aus azeotropischen oder nicht-azeotropischen organischen Flüssigkeiten ausgewählt ist.

9. System (300) nach einem der vorstehenden Ansprüche 5 bis 8, **dadurch gekennzeichnet, dass** es ein Vorverdichtungsmittel (306) des thermischen Fluides aufweist, das der thermischen Vorrichtung (120) vorgelagert angeordnet ist.

10. System (300) nach dem vorstehenden Anspruch, **dadurch gekennzeichnet, dass** das Vorverdichtungsmittel (306) des thermischen Fluides das Folgende aufweist:
- zumindest einen Leit-Kolben genannten Kolben (306_{M}), der von der durch das Behandlungsmodul (112) bereitgestellten Restflüssigkeit angetrieben wird, und
- einen Folge-Kolben genannten Kolben (306_{E}), der das thermische Fluid (130) enthält und von dem zumindest einen Leit-Kolben (306_{M}) angetrieben wird.

11. Verfahren (400) für das Reinigen einer zu behandelnden Flüssigkeit (104), insbesondere Salzwasser, mit zumindest einer Iteration der folgenden Schritte:
- Verdichtung der zu behandelnden Flüssigkeit (104), und
- Bereitstellen der verdichteten, zu behandelnden Flüssigkeit (104) an einem Behandlungsmodul (112), welches eine erste, als gereinigte Flüssigkeit bezeichnete Flüssigkeit, und eine zweite, als Restflüssigkeit bezeichnete Flüssigkeit bereitstellt;
**dadurch gekennzeichnet, dass** der Schritt der Verdichtung durch zumindest einen Folge-Kolben genannten Kolben (102_{E}) durchgeführt wird, der fest mit einem Leit-Kolben genannten Kolben (102_{M}) verbunden ist, dessen Querschnitt größer ist als der Querschnitt des Folge-Kolbens (102_{E}) und ein Antriebsfluid (130;314) aufnimmt, und dass das Verfahren vor dem Schritt der Verdichtung der zu behandelnden Flüssigkeit (104) einen Schritt der Vorverdichtung der zu behandelnden Flüssigkeit (104) aufweist, der durch einen Folge-Kolben (302_{E}), der die zu behandelnde Flüssigkeit (104) enthält und mit zumindest einem Leit-Kolben (302_{M}), der die Restflüssigkeit aufnimmt, fest verbunden ist.

12. Verfahren (400) nach dem vorstehenden Anspruch, **dadurch gekennzeichnet, dass** das Behandlungsmodul ein Behandlungsmodul für zu behandelnde Flüssigkeit durch Umkehrosmose ist.

13. Verfahren (400) nach einem der Ansprüche 11 oder 12, **dadurch gekennzeichnet, dass** der Leit-Kolben (102_{M}) ein doppeltwirkender Kolben ist, und zwei Folge-Kolben (102_{E1}; 102_{E1}) antreibt, sodass wenn einer der Folge-Kolben (102_{E1}; 102_{E1}) von der zu behandelnden Flüssigkeit (104) entleert wird, der andere Folge-Kolben (102_{E1}; 102_{E1}) simultan mit zu behandelnder Flüssigkeit (104) gefüllt wird.

14. Verfahren (400) nach einem der vorstehenden Ansprüche 11 bis 13, **dadurch gekennzeichnet, dass** das Antriebsfluid (130) ein thermisches Fluid ist, wobei das Verfahren (400) einen Schritt der Druckerhöhung des Antriebsfluides (130) durch thermischen Austausch aufweist.

15. Verfahren (400) nach einem der vorstehenden Ansprüche 11 bis 13, **dadurch gekennzeichnet, dass** das Antriebsfluid (314) ein inkompressibles Fluid ist, wobei das Verfahren die folgenden Schritte aufweist:
- einen Schritt des thermischen Austauschs zu einem thermischen Fluid (130), um den Druck des thermischen Fluides (130) zu erhöhen, und
- einen Schritt der Druckübertragung von dem thermischen Fluid (130) zu dem Antriebsfluid (314).

16. Verfahren (400) nach dem vorstehenden Anspruch, **dadurch gekennzeichnet, dass** der Schritt der Druckübertragung durch zumindest einen Zylinder (310) durchgeführt wird, der das Antriebsfluid (314) und eine in dem Zylinder (310) angeordnete und das thermische Fluid (130) enthaltende elastische Blase (312) enthält.

17. Verfahren (400) nach einem der vorstehenden Ansprüche 14 bis 16, **dadurch gekennzeichnet, dass** es einen Schritt der Vorverdichtung des thermischen Fluides (130) aufweist, der durch einen Folge-Kolben genannten Kolben (306_{E}) durchgeführt wird, der das thermische Fluid (130) enthält und mit zumindest einem Leit-Kolben genannten Kolben (306_{M}), der die Restflüssigkeit aufnimmt, fest verbunden ist.

18. Verfahren nach einem der vorstehenden Ansprüche 15 bis 17, **dadurch gekennzeichnet, dass** es zwei Halbzyklen aufweist, wobei jeder Halbzyklus die folgenden Schritte aufweist:
- eine Phase I (402), die simultan das Folgende umfasst:
• einen Schritt der Erhöhung des Drucks des thermischen Fluides (130) durch thermischen Austausch,
• einen Schritt der Druckübertragung von dem thermischen Fluid (130) zu dem Antriebsfluid (314);
- eine Phase II (404), die simultan das Folgende umfasst:
• einen Schritt der Erhöhung des Drucks des thermischen Fluides (130) durch thermischen Austausch,
• einen Schritt der Druckübertragung von dem thermischen Fluid (130) zu dem Antriebsfluid (314),
• einen Schritt der Verdichtung der zu behandelnden Flüssigkeit (104),
• einen Schritt des Reinigens der zu behandelnden Flüssigkeit (104) durch Umkehrosmose,
• einen Schritt der Vorverdichtung des thermischen Fluides (130);
- eine Phase III (406), die simultan das Folgende umfasst:
• einen Schritt der Erhöhung des Drucks des thermischen Fluides (130) durch thermischen Austausch,
• einen Schritt der Druckübertragung von dem thermischen Fluid (130) zu dem Antriebsfluid (314),
• einen Schritt der Verdichtung der zu behandelnden Flüssigkeit (104),
• einen Schritt des Reinigens der zu behandelnden Flüssigkeit (104) durch Umkehrosmose und
• einen Schritt der Vorverdichtung der zu behandelnden Flüssigkeit (104); und
- eine Phase IV (408), die einen Schritt der Vorverdichtung der zu behandelnden Flüssigkeit (104) umfasst.

## Claims

1. A system (100, 200, 300) for purifying a liquid to be treated (104), in particular salted water, comprising:
• a module (112), called treatment module, for treating the liquid to be treated (104) and providing a purified liquid, and a residual liquid; and
• a means (102) for pressurizing the liquid to be treated (104) to supply said treatment module, comprising:
▪ a cylinder (102M), called a master cylinder, provided to be driven by a fluid, called a working fluid; and
▪ at least one cylinder (102E), called a slave cylinder, driven by said master cylinder, provided to receive the liquid to be treated (104) and supply the liquid to be treated to said treatment module (112);
**characterized in that** the cross section of said master cylinder (102M) is greater than the cross section of said at least one slave cylinder (102E) so that, for a given pressure of said working fluid (130, 314) in the master cylinder, a greater pressure is generated on the liquid to be treated (104) in the slave cylinder (102E); and that it comprises a means (302) for pre-pressurizing the liquid to be treated (104), upstream of the pressurizing means (102); said pre-pressurizing means (302) comprising:
• at least one cylinder (302M), called a master cylinder, connected to the treatment module (112), and driven by the residual liquid provided by the treatment module (112); and
• a cylinder (302E), called a slave cylinder, containing the liquid to be treated, driven by said at least one master cylinder (302M).

2. The system (100, 200, 300) according to claim 1, wherein the treatment module (112) is a module for treating the liquid to be treated by reverse osmosis.

3. The system (100, 200, 300) according to any of the preceding claims, wherein the master cylinder (102M) is a double-acting cylinder, and the pressurizing means (102) comprises two slave cylinders (102E1, 102E2), situated symmetrically on both sides of the master cylinder (102M), and driven by said master cylinder (102M).

4. The system (300) according to any of the preceding claims, further comprising a reservoir (304), called intermediate reservoir, arranged to store the liquid to be treated (104) at an intermediate pressure, less than an osmotic pressure, at an outlet of the means (302) for pre-pressurizing the liquid to be treated and to supply the pressurizing means (102) with the liquid to be treated (104).

5. The system (100, 200) according to any of the preceding claims, wherein the working fluid (130) is a thermal fluid, a pressure of which varies as a function of a temperature of the working fluid, said system comprising a thermal device (120), arranged upstream of the pressurizing means (102), and carrying out a heat exchange towards said working fluid (130), so as to increase its pressure.

6. The system (300) according to any of claims 1 to 4, wherein the working fluid (314) is an incompressible fluid, said system (300) comprising:
• a thermal device (120), arranged upstream of the pressurizing means (102), and carrying out a heat exchange towards a thermal fluid (130), so as to increase the pressure of said thermal fluid (130); and
• a pressure transfer means (318), arranged between said thermal device (120) and the pressurizing means (102), to transmit the pressure from said thermal fluid (130) to the working fluid (314).

7. The system (300) according to the preceding claim, wherein the pressure transfer means (318) comprises:
• at least one cylinder (310), called transfer cylinder, connected to the pressurizing means (102), and provided to receive the working fluid (314); and
• at least one deformable volume (312), arranged in said transfer cylinder (310), and provided to receive the thermal fluid (130).

8. The system (100, 200, 300) according to any of claims 5 to 7, wherein the thermal fluid (130) is a fluid selected from: saturated or unsaturated C5- to C10-type hydrocarbons, organic fluids (R134a, R236fa, R254fa, R600, R601, RC318, R1234yf) or mixtures of azeotropic or non-azeotropic organic fluids.

9. The system (300) according to any of claims 5 to 8, **characterized in that** it comprises a thermal fluid pre-pressurizing means (306), arranged upstream of the thermal device (120).

10. The system (300) according to the preceding claim, wherein the thermal fluid pre-pressurizing means (306) comprises:
• at least one cylinder (306M), called master cylinder, driven by the residual liquid (112) provided by the treatment module; and
• a cylinder (306E), called slave cylinder, containing the thermal fluid (130), driven by said at least one master cylinder (306M).

11. A method (400) for purifying a liquid, called a liquid to be treated (104), comprising at least one iteration of the following steps:
• pressurizing the liquid to be treated (104); and
• supplying said pressurized liquid to be treated (104) to a treatment module (112) providing a first liquid, called a purified liquid, and a second liquid, called a residual liquid;
**characterized in that** the pressurizing step is carried out by at least one cylinder (102E), called a slave cylinder, firmly connected to a cylinder (102M), called a master cylinder, with a cross section larger than the cross section of said slave cylinder (102E), and receiving a working fluid (130, 314); and that it comprises a step of pre-pressurizing the liquid to be treated (104), before the step of pressurizing the liquid to be treated (104), carried out by a cylinder (302E), called slave cylinder, containing the liquid to be treated (104), firmly connected to at least one cylinder (302M), called master cylinder, receiving the residual liquid.

12. The method (400) according to the preceding claim, wherein the treatment module is a module for treating liquid to be treated by reverse osmosis.

13. The method (400) according to any of claims 11 or 12, wherein the master cylinder (102M) is a double-acting cylinder, and drives two slave cylinders (102E1, 102E1) so that, when one of the slave cylinders is emptied of liquid to be treated (104), the other slave cylinder (102E1, 102E1) is simultaneously filled with liquid to be treated (104).

14. The method (400) according to any of claims 11 to 13, wherein the working fluid (130) is a thermal fluid, said method (400) comprising a step of increasing the pressure of said working fluid (130) by heat exchange.

15. The method (400) according to any one of claims 11 to 13, wherein the working fluid (314) is an incompressible fluid, said method comprising the following steps:
• a step of heat exchange towards a thermal fluid (130) in order to increase the pressure of said thermal fluid (130); and
• a step of transferring pressure from said thermal fluid (130) to said working fluid (314).

16. The method (400) according to the preceding claim, wherein the pressure transfer step is carried out by at least one cylinder (310) containing the working fluid (314) and an elastic bladder (312), arranged in said cylinder (310), and containing the thermal fluid (130).

17. The method (400) according to any one of claims 14 to 16, **characterized in that** it further comprises a step of pre-pressurizing the thermal fluid (130), carried out by a cylinder (306E), called slave cylinder, containing the thermal fluid (130), firmly connected to at least one cylinder (306M), called master cylinder, receiving the residual liquid.

18. The method according to any one of claims 15 to 17, **characterized in that** it comprises two half cycles, each half cycle comprising the following phases:
▪ a phase I (402) simultaneously comprising:
▪ a step of increasing the pressure of the thermal fluid (130) by heat exchange; and
▪ a step of transferring pressure from said thermal fluid (130) to said working fluid (314);
▪ a phase II (404) simultaneously comprising:
▪ increasing the pressure of the thermal fluid (130) by heat exchange;
▪ transferring pressure from said thermal fluid (130) to said working fluid (314);
▪ pressurizing the liquid to be treated (104);
▪ purifying the liquid to be treated (104) by reverse osmosis; and
▪ pre-pressurizing the thermal fluid (130);
▪ a phase III simultaneously comprising:
▪ increasing the pressure of the thermal fluid (130) by heat exchange;
▪ transferring pressure from said thermal fluid (130) to said working fluid (314);
▪ pressurizing the liquid to be treated (104);
▪ purifying the liquid to be treated (104) by reverse osmosis; and
▪ pre-pressurizing the liquid to be treated (104); and
▪ a phase IV (408) comprising a step of pre-pressurizing the liquid to be treated (104).
